# EUROPEAN PATENT SPECIFICATION

(11) **EP 2 675 388 B1**
(45) Date of publication and mention of the grant of the patent: **08.04.2020**
(21) Application number: 12746608.4
(22) Date of filing: 17.02.2012
(51) Int. Cl.: A61C 3/02

(54) **ENDODONTIC BURS AND KITS**
ENDODONTISCHE BOHRER UND KITS
FRAISES ENDODONTIQUES ET KITS

(30) Priority: 14.06.2011 US 201113160297; 18.02.2011 US 201161444527 P
(43) Date of publication of application: 25.12.2013
(73) Proprietor: SS White Burs, Inc., Lakewood, NJ 08701 (US)
(72) Inventor: CLARK, David, Lakewood, WA 98499 (US); QUIGLEY, Michael, Toms River, NJ 08755 (US); MILES, Brant, Whitewater, WI 53190 (US)
(74) Representative: Thompson, Andrew John
(86) International application number: PCT/US2012/025675
(87) International publication number: WO 2012/112909

(56) References cited:
- WO-A1-01/03603
- CN-U- 201 676 027
- DE-A1- 10 307 781
- US-A1- 2001 034 007
- US-A1- 2004 058 298
- US-A1- 2004 081 940
- US-A1- 2006 121 415
- US-B1- 6 257 889
- US-B1- 6 361 316
- US-B1- 7 547 210

## Description

### BACKGROUND

Access is an essential element to successful endodontics. Preparing the endodontic access cavity is a critical step in a series of procedures that potentially leads to the three-dimensional obturation of the root canal system. Access cavities should be cut so the pulpal roof, including all overlying dentin, is removed. The size of the access cavity is dictated by the position of the orifice(s). The axial walls are extended laterally such that the orifice(s) is just within this outline form. The internal walls are flared and smoothed to provide straight-line access into the orifice and the root canal system. Additionally, access preparations are expanded to eliminate any coronal interference during subsequent instrumentation. Access objectives are confirmed when all the orifices can be visualized without moving the mouth mirror.

The traditional approach for gaining endodontic access in order to perform root canal procedures is achieved by utilizing conventional, large round shaped burs. This tactile based approach is fundamentally flawed. Round shaped burs are significantly more difficult to negotiate calcified canal systems, result in aggressive removal of precious dentin, and potentially damage the more critical cervical area of the tooth.

When cutting endodontic access and burrowing the calcified tooth with round shaped burs, the tip of the round bur typically becomes slightly misdirected and severely gouges more of the tooth structure. As the access goes deeper into the tooth utilizing the conventional round bur, the access opening becomes wider internally which makes the tooth much more prone to fracturing and reduces the tooth's prospect for long term retention.

The design of current endodontic burs is problematic in several respects. Surgical length right-angle round burs, and the Munce discovery bur, have a large head size, which can create centering problems, bur runoff and gouging. The round bur heads leave a rough finish, making anatomical mapping and reading difficult.

Mueller burs have a thin shaft for visibility; however, the shaft is too flexible and cannot be directed toward locating canals. Because of the flexibility, pressure cannot be applied to the bur to force it to end cut. The round head is big and not conservative, and creates an uneven (ledging) surface in the tooth, and leave a poor, rough finish.

The Gates Glidden instruments are problematic because the thin shanks of these instruments makes them difficult to "steer" away from high risk anatomy. As a Gates Glidden instrument straightens the coronal or "high curve," it can shortcut across a fluting or furcation and weaken or even strip perforations. In addition, the Gates Glidden instruments require first the use of a round bur to access the pulp chamber, and several instruments of ever smaller size are needed to access the pulp chamber.

Ultrasonic tips, while conservative in nature with a small diamond coated tips, wear down very quickly and are very costly. In addition, ultrasonics do not leave a smooth or polished surface.
US 2004/0058298 A1 is directed to a tapered self-centering rotating endodontic file comprising an annular governor collar which merges into the handle.
DE 103 07 781 A1 is directed to an abrasive dental tool having a working head comprising abrasive surface irregularities.
US 6,257,889 B1 is directed to a dental bur that is suitable for use in examining anomalies and in the restoration of decayed areas of teeth, with a bur head having a generally elongate conical shaped body with a base and opposed vertex.
US 2001/034/007 A1 is directed towards a dental tool for grinding teeth, comprising a grinding head and a rotatingly drivable shaft.

### SUMMARY

The present invention is set out in the appended claims. It relates to a uniquely designed bur with a long thin shank that can range from 17mm to 45mm in length. The bur heads are slender, conically tapered configurations that can range in head length from 0.039 inches (0.09906 centimetres) to 0.177 inches (0.44958 centimetres) with micro-diameter tips that can range from 0.016 inches (0.04064 centimetres) to 0.059 inches (0.14986 centimetres) in diameter. Cutting blades are located on the outer surface of the bur head and designed to efficiently cut in vertical and lateral directions to leave a polished dentin surface for better identification of hidden root canals and for easier canal mapping. The burs of the present invention are designed for non surgical endodontic treatment, with focus on gaining safer and less iatrogenic access to the pulp chamber and identification of the root canal system.

A self-centering endodontic bur for root canal procedures is disclosed in accordance with a first embodiment of the invention, comprising a drive shaft connectable to a motorized dental handpiece, a shank attached to the drive shaft with the same axis as the drive shaft; and a head attached to the shank at a base; wherein the head comprises an outer surface having a plurality of cutting blades forming a conical shape from a narrow vertex to the base; wherein the narrow vertex forms a round ended cone, the plurality of cutting blades running parallel to the axis of the shank and extending outwardly from the outer surface, wherein the shank tapers in width from the drive shaft to the head in a manner which allows microscopic observation of the head wherein the shank is of a stiffness capable of self-centering the endodontic bur in use.

In the bur according to the invention, the bur head and the shank may meet at a base, and the transition between the base of the bur head and the shank may be smoothly machined. The diameter of the base of the bur head may be no more than approximately 0.003 inches (0.00762 centimetres) greater than the diameter of the shank at the transition between the base of the head and the shank.

The bur may have a head of carbide material, such as tungsten carbide, stainless steel, hardened tool steel, sintered metals, sintered diamonds, sintered ceramics, plated diamond, diamond, zirconia, polymers, ceramics, ceramic oxides, lithium disilicate, titanium, nickel titanium, or aluminum.

The bur of the present invention is a long thin bur that penetrates deep into the tooth for restoration purposes, primarily for root canal procedures. The bur provides self-centering characteristics that minimize the destruction of healthy tooth structure during the root canal procedure.

The tapered conical head of the bur of the present invention allows for increased self-centering while reducing bur runoff and gouging associated with round burs. The round ended cone of the bur of the present invention cuts effectively but much more safely than a needle tipped bur.

The bur of the current invention allows the use of direct microscope vision to allow a biomimetic shape, and can preserve the amount of peri-cingulum primary dentin and quality of residual dentin. The polished surface left by the dentin-carbide interface has better visual information than the chattered surface left by ultrasonic instruments, or scratchy dentin surface of a diamond bur.

The tip size of the bur of the present invention is smaller than round burs, with the tip of the bur of the present invention being ¼ the size of a corresponding round bur. The spaces created by the conical bur of the present invention lend themselves to easier discovery of calcified canal systems.

The shank of the bur is stiff enough to steer the bur with better control than prior art burs, with less potential to bend or break the shank, even though the tip is much smaller than other endodontic burs.

The burs of the present invention can be packaged together in kits, with a number of different burs having different head lengths and diameters, designed for different endodontic tasks.

Ideally, endodontic access cavities should parallel the principle of restorative dentistry where the axial walls of a "finished" preparation taper and provide draw for a wax pattern. Cleaning and shaping potentials are dramatically improved when instruments conveniently pass through the occlusal opening, effortlessly slide down smooth axial walls and are easily inserted into the orifice. Spacious access cavities are an opening for canal preparation.

The burs according to the present invention may be packaged in a kit comprising one or more burs according to claim 1, wherein the burs comprising the kit have heads of various sizes and shanks of various sizes for specialized endodontic procedures.

The present disclosure also includes a method for endodontic deep troughing, comprising installing a bur according to the present invention in a dental handpiece, and troughing enamel or dentin with a light sweeping motion.

The present disclosure also includes a method for endodontic exploration, comprising exploring dentin of a tooth using a dental handpiece installed with a bur according to the present invention, and using a dental microscope or loop to visually observe the endodontic exploration at the bur.

### BRIEF DESCRIPTION OF THE DRAWINGS

The invention can be better understood with reference to the following drawings and description. The components in the figures are not necessarily to scale, emphasis instead being placed upon illustrating the principles of the invention. In the drawings:
FIG. 1 is a lengthwise schematic view of a first embodiment of the bur according to the present invention;
FIG. 1A is a side view of the head portion of a first embodiment of the bur according to the present invention;
FIG. 1B is a frontal view of the head portion of a first embodiment of the bur according to the present invention;
FIG. 2 is a lengthwise schematic view of a second embodiment of the bur according to the present invention;
FIG. 2A is a side view of the head portion of a second embodiment of the bur according to the present invention;
FIG. 2B is a frontal view of the head portion of a second embodiment of the bur according to the present invention;
FIG. 3 is a lengthwise schematic view of a third embodiment of the bur according to the present invention;
FIG. 3A is a side view of the head portion of a third embodiment of the bur according to the present invention;
FIG. 3B is a frontal view of the head portion of a third embodiment of the bur according to the present invention;
FIG. 4 is a lengthwise schematic view of a fourth embodiment of the bur according to the present invention;
FIG. 4A is a side view of the head portion of a fourth embodiment of the bur according to the present invention;
FIG. 4B is a frontal view of the head portion of a fourth embodiment of the bur according to the present invention;
FIG. 5 is a lengthwise schematic view of a fifth embodiment of the bur according to the present invention;
FIG. 5A is a side view of the head portion of a fifth embodiment of the bur according to the present invention;
FIG. 5B is a frontal view of the head portion of a fifth embodiment of the bur according to the present invention;
FIG. 6 is a lengthwise schematic view of a sixth embodiment of the bur according to the present invention;
FIG. 6A is a side view of the head portion of a sixth embodiment of the bur according to the present invention;
FIG. 6B is a frontal view of the head portion of a sixth embodiment of the bur according to the present invention;
FIG. 7 is a lengthwise schematic view of a seventh embodiment of the bur according to the present invention;
FIG. 7A is a side view of the head portion of a seventh embodiment of the bur according to the present invention;
FIG. 7B is a frontal view of the head portion of a seventh embodiment of the bur according to the present invention;
FIG. 8 is a lengthwise schematic view of a eighth embodiment of the bur according to the present invention;
FIG. 8A is a side view of the head portion of a seventh embodiment of the bur according to the present invention;
FIG. 8B is a frontal view of the head portion of a seventh embodiment of the bur according to the present invention.

### DETAILED DESCRIPTION

The burs of the present invention are designed for use with a dental system having a dental unit connected to a dental handpiece. The dental unit provides power to the handpiece. The dental burs of the invention engage and are captively held by the handpiece which rotates the dental bur at a preselected rotational speed upon receipt of compressed air operating power from the dental unit. Each of the dental burs, as shown in the embodiments below, has a drive shaft engaged with the handpiece which provides the operative power from the dental unit to rotate the bur head and enable it to perform dental procedures on a tooth. The dental handpiece may be a low speed handpiece that rotates up to 5,000-80,000 rotations per minute, or a high-speed handpiece that rotates at 300,000-400,000 rotations per minute or greater.

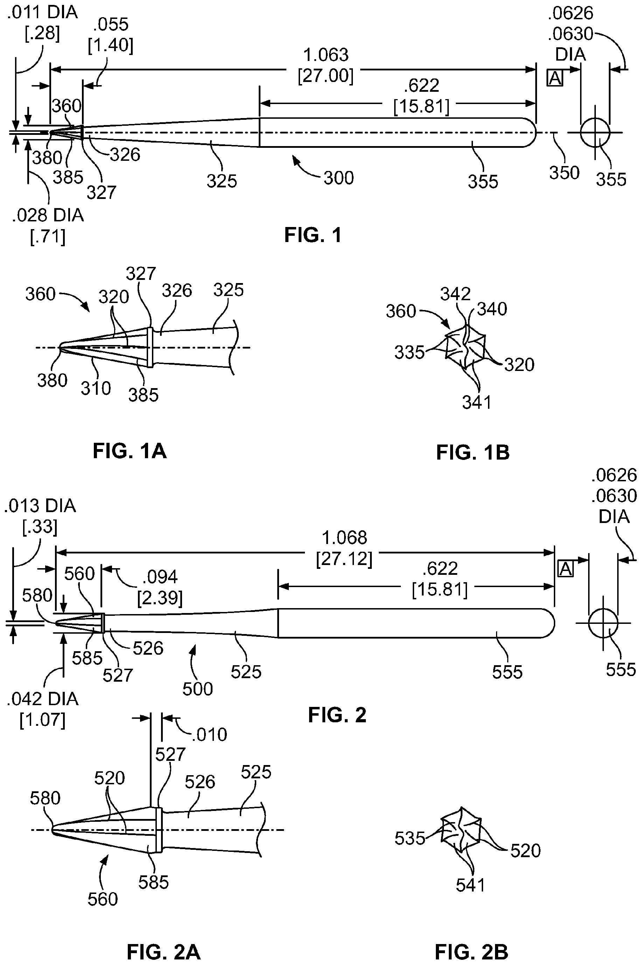

As shown in FIGs. 1, 1A, and 1B, a first embodiment of a dental bur 300 according to the present invention includes a bur head 360 having a body 370 with a base 385 and an opposed vertex 380. A drive shaft 355 is coaxially aligned with a longitudinal axis 350 of the body 370 for mounting in a handpiece. The drive shaft 355 in this picture is a surgical length friction grip type for use with high speed dental handpieces.

The drive shaft 355 is connected to the head by a tapering shank 325 that tapers in diameter from the drive shaft 355 of the bur 300 to a neck 326 and mount 327. The drive shaft and shank are typically constructed of metal, typically steel, and the bur head 360, which may be made of tungsten carbide is mounted to the shank at mount 327. The shank 325 tapers over a length of approximately 0.384 inches (0.97536 centimetres) from 0.630 inches (1.6002 centimetres) in diameter at the drive shaft 355 to approximately 0.025 inches (0.0635 centimetres) at the neck 326. The difference between the diameter of the shank 325 at the neck 326 and mount 327 and the bur head base 385 is minimized. The shank is designed so as to taper at a conical angle as the bur head, and to minimize the transition between the shank 325 and the bur head 385, so that the microscopic sight line to the bur head 360 is uninterrupted. The shank 325, however, is designed to be stiff so as to allow the bur to be self-centering.

In addition, the bur head base 385, neck 326 and mount 327 may be machined so as to form a smooth, gradual transition between the bur head 360 and the shank 325. In this manner, the possibility of damage caused by the bur head base to the dentin or enamel upon withdrawal of the bur from the tooth is minimized.

As shown in FIG. 1, the diameter of the head 360 of the dental bur 300 is 0.011 inches (0.02794 centimetres) at a location near the vertex 380 of the bur. The bur head 360 has a conical shape and a length measured along the longitudinal axis 350 in this embodiment being 0.055 inches (0.1397 centimetres) in length. The base 385 has a diameter of approximately 0.028 inches (0.07112 centimetres). It is understood that variations to the diameter width at the base 385 of the bur head 360 may be made.

The bur head 360, as shown in FIG. 1A, includes an outer surface 310 having cutting members 320 extending outwardly from the outer surface of the bur head 360 and in which at least a portion of the cutting members 320 are positioned between the base 385 and vertex 380 and extend along the outer surface over the length of the head measured along the longitudinal axis. The bur head 360 with its elongate cutting members 320 may be formed of a carbide material such as tungsten carbide. The conical bur head 360 has its maximum diameter proximate the base 385 with the diameter of the bur head gradually decreasing as it extends toward the opposed vertex 380.

The cutting members 320 are preferably elongated blades having a height extending radially from the bur head 360. The blades 120 are generally parallel to the longitudinal axis 350 of the body 370 and may curve from the vertex to the base at a helix angle of preferably two degrees. However, an acceptable range for the helix angle of the blades is zero degrees (0.degree.) to twelve degrees (12.degree.). Preferably six cutting members 320 are located on the bur head 360 with two opposing cutting members 335 extending past the remaining cutting members to form a drill tooth 140 (See Fig. IB). The cutting members 320 provide a variable cutting intensity along the longitudinal axis 350 upon rotation of the dental bur 300 at a preselected speed. It is understood that diamonds or other durable cutting materials may selectively be employed as cutting members at the outer surface of the bur head.

Each of the six cutting members 320 in Fig. 1 has a rake face 341 that is the leading face of each blade. A rake angle of each cutting member 320 is defined as the angle of the rake face 341 of the cutting member to the cross-sectional axis or radius 342 of the dental bur 300 extending outwardly from the longitudinal axis of the dental bur. A preferred rake angle is minus eight degrees (-8.degree.) for each of the cutting members 320 of the bur head 360. The rake angle for the blades of the bur head may selectively range from zero degrees (0.degree.) to minus fifteen degrees (-15.degree.). The rake face 340 may also vary along the length of the bur head 360.

The above-described embodiment of the dental bur of the present invention is intended for use in initial (cavosurface) access for small incisors, and may be used for troughing calcified canals and roof "sawing" in molars.

In a second embodiment according to the present invention, shown in Figs. 2-2B, a bur 500 has a head similar in overall structure to the head according to Figs. 1-1B in terms of the general conical shape and structure of cutters 520 and rake faces 541; however, the head in this instance has a length from base 585 to vertex 580 of approximately 0.094 inches (0.23876 centimetres), and the diameter ranges from 0.013 inches (0.03302 centimetres) near the vertex 580 to a maximum of approximately 0.045 inches (0.1143 centimetres) at the base. The shank 525 tapers in diameter over a length of approximately 0.342 inches (0.86868 centimetres) from a diameter of approximately 0.630 inches (1.6002 centimetres) at the drive shaft 555 to approximately 0.042 inches (0.10668 centimetres) at the neck 526, with the neck 526, base 585, and mount 527 machined to provide a smooth transition between the neck of the shank 525 and the bur head 560. This embodiment of the bur is particularly useful for initial endodontic access in non-restored anterior and bicuspids.

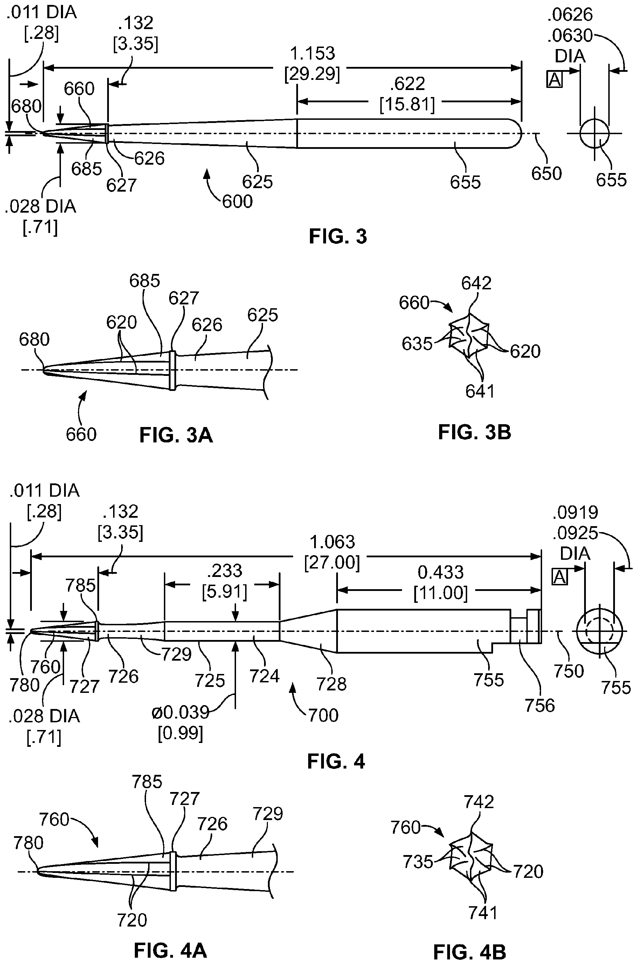

In a third embodiment, shown in FIGS. 3-3B, a bur 600 also employs a surgical length friction grip drive shaft 625. In this embodiment, the bur head 660 is longer, a length of approximately 0.132 inches (0.33528 centimetres), and a diameter widening from approximately 0.011 inches (0.02794 centimetres) near the vertex 680 to 0.028 inches (0.07112 centimetres) at the base 685. The shank 625 tapers over a length of approximately 0.389 inches (0.98806 centimetres), from a diameter of approximately 0.630 inches (1.6002 centimetres) near the drive shaft 655 to 0.025 inches (0.0635 centimetres) at the neck 626. Again, the transitions between the neck 626, mount 627, and head base 685 is machined to be smooth and gradual so as to prevent damage on withdrawal. The bur head 660 is similar to other embodiments, with its structure of six cutters 620, a drive tooth formed of extended cutters 635, and rake faces 641. The long, narrow bur 600 according to this embodiment is particularly suited to deep troughing, and for navigating super ovoid and calcified canals.

A fourth embodiment according to the present invention is shown in Figs. 4-4B. A bur 700 according to this embodiment utilizes a standard-length right angle type drive shaft 755 with latching member 756 for use with slow-speed handpieces, having a diameter of approximately 0.0920 inches (0.23368 centimetres). Like the previously described third embodiment, this fourth embodiment bur 700 has a conical head 760 with six cutting members 720 and rake faces 741. The bur head 760 has a length of approximately 0.132 inches (0.33528 centimetres), widening from 0.011 inches (0.02794 centimetres) near the vertex 780 to 0.028 inches (0.07112 centimetres) at the base 785. The shank 725 is machined to taper down from the drive shaft to the head in a stepwise progression, tapering from 0.0930 inches (0.23622 centimetres) to approximately 0.039 inches (0.09906 centimetres) over a portion 728 near the drive shaft 755 over a length approximately 0.118 inches (0.29972 centimetres) along longitudinal axis 750. The shank 725 has a second, non-tapered portion 724 having a diameter of 0.039 inches (0.09906 centimetres) and a length of 0.233 inches (0.59182 centimetres). A third portion 729 of shank 725 tapers again from 0.039 inches (0.09906 centimetres) to 0.025 inches (0.0635 centimetres) at the neck 726 over a length of 0.137 inches (0.34798 centimetres) along longitudinal axis 750. In this manner, the shank 725 is designed to allow a sightline from the instrument to the bur head. The neck 726, mount 727, and bur head base 785 are machined to provide a smooth, gradual transition. The fourth embodiment of the bur of the present invention is designed especially for deep troughing, deep orifice enlargement, and for navigating calcified canals.

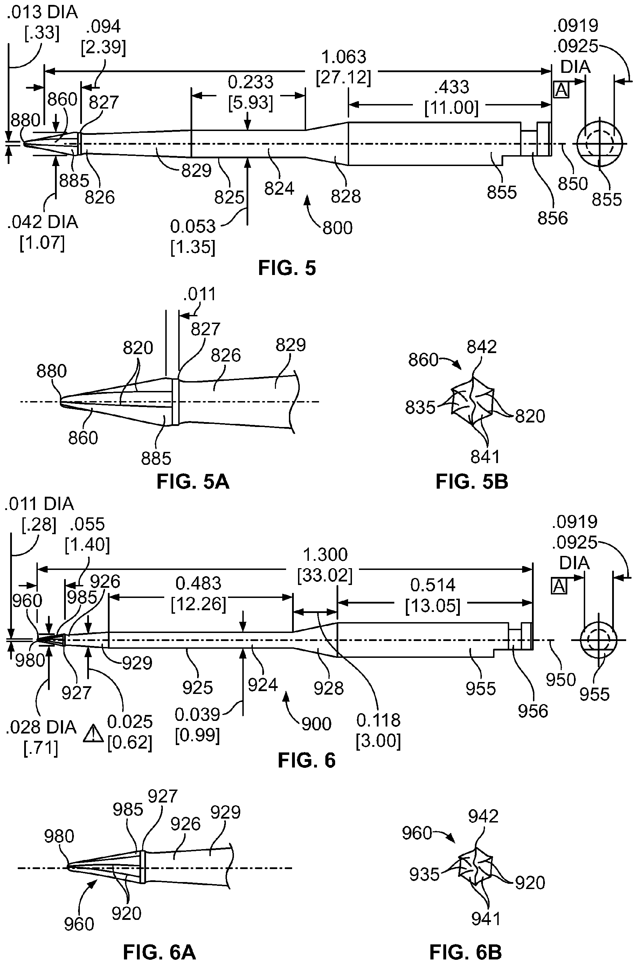

In a fifth embodiment, shown in Figs. 5, 5A, and 5B, the bur 800 has a head 860 shaped and sized similarly to the bur head 560 of the second embodiment (see Fig. 5), with a head length of approximately 0.094 inches (0.23876 centimetres), and widening from 0.013 inches (0.03302 centimetres) near the vertex 880 to 0.042 inches (0.10668 centimetres) at the base 885 along longitudinal axis 850. The bur head is similarly shaped to other embodiments, with six cutting members 620, rake faces 641, and extended cutting members 635. The shank 825 tapers in a stepwise progression, a first portion 828 having a length of 0.087 inches (0.22098 centimetres) along longitudinal axis 850, which tapers from 0.092 inches (0.23368 centimetres) at the drive shaft to 0.053 inches (0.13462 centimetres) in diameter. A second portion 824 has a diameter of approximately 0.053 inches (0.13462 centimetres) over a length of 0.233 inches (0.59182 centimetres). A third portion 829, which has a length of 0.211 inches (0.53594 centimetres), tapers from 0.053 inches (0.13462 centimetres) to approximately 0.036 inches (0.09144 centimetres) at the neck 827. Again, the base 885, mount 827, and neck 826 are machined for a smooth, gradual transition. This fifth embodiment is particularly suited to de-roofing the pulp chamber, and deep orifice enlargement and calcified canals.

A sixth embodiment of the invention, shown in Figs. 6, 6A, and 6B, is an extra-long right angle bur 900 intended for low-speed dental handpieces. The bur 900 has a head of the same shape, and size, as the first embodiment (Figs. 1-1B), having a conical head 960 approximately 0.055 inches (0.1397 centimetres) in length, having a diameter approximately 0.011 inches (0.02794 centimetres) near the vertex 980 widening to 0.028 inches (0.07112 centimetres) at base 985. The bur head 960 has six cutting members 920 and six rake faces 941 with two of the cutting members 935 extending forward of the remainder. The bur 900 has a drive shaft 955 of approximately 0.0920 inches (0.23368 centimetres) in diameter, with a latching member 956. The shank 925 tapers in a stepwise progression, and has a portion 928 that tapers from 0.0920 inches (0.23368 centimetres) at the drive shaft 955 to 0.039 inches (0.09906 centimetres) over a length of 0.118 inches (0.29972 centimetres) along longitudinal axis 950. A second portion 924 has a diameter of 0.039 inches (0.09906 centimetres) and a length of 0.483 inches (1.22682 centimetres). A third portion 929 tapers over a length of 0.120 inches (0.3048 centimetres) along the longitudinal axis 950 from 0.039 inches (0.09906 centimetres) to 0.025 inches (0.0635 centimetres) at neck 926. The neck 926, mount 927, and bur head base 985 are machined so as to provide a smooth, gradual transition from bur head 960 to shank 925.

This sixth embodiment is designed for deep troughing, retrieving separated instruments and navigating deeply calcified canals.

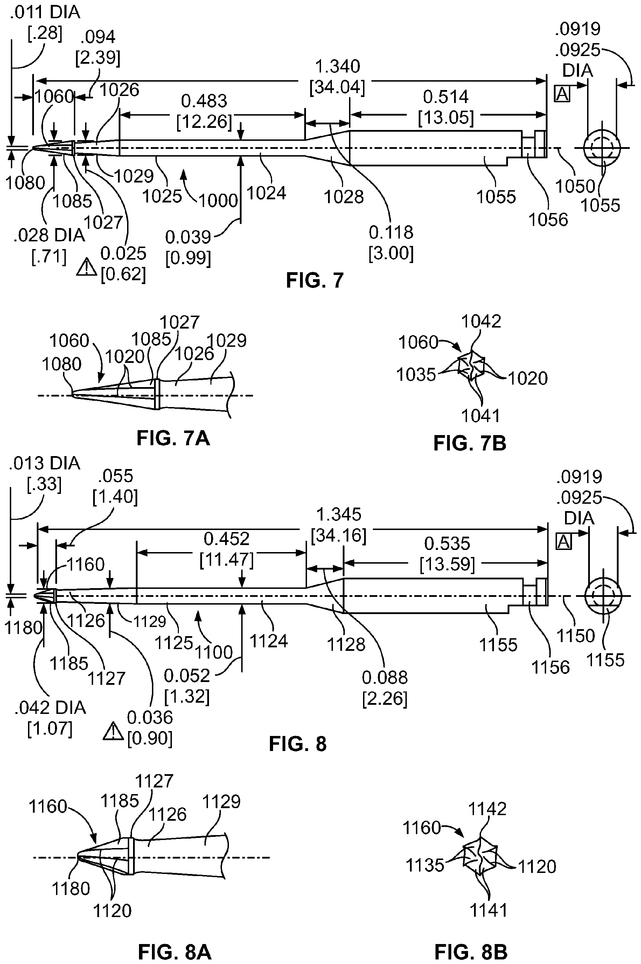

A seventh embodiment, shown in Figs. 7, 7A, and 7B, is also designed for deep troughing, retrieving separated instruments and navigating deeply calcified canals. The head 1060 of bur 1000 is sized and shaped similarly to the embodiment shown in Fig. 7, having a length along longitudinal axis 1050 of approximately 0.094 inches (0.23876 centimetres), and widening from 0.011 inches (0.02794 centimetres) in diameter near vertex 1080 to 0.028 inches (0.07112 centimetres) at base 1085. The bur head 1060 has six cutting members 1020 and six rake faces 1041 with two of the cutting members 1035 extending slightly forward of the remainder. The bur 1000 has a drive shaft 1055 of approximately 0.0920 inches (0.23368 centimetres) in diameter, with a latching member 1056. The shank 1025 tapers in a stepwise progression, and has a portion 1028 that tapers from 0.0920 inches (0.23368 centimetres) at the drive shaft 1055 to 0.039 inches (0.09906 centimetres) over a length of 0.118 inches (0.29972 centimetres) along longitudinal axis 1050. A second portion 1024 has a diameter of 0.039 inches (0.09906 centimetres) and a length of 0.483 inches (1.22682 centimetres). A third portion 1029 tapers over a length of 0.121 inches (0.30734 centimetres) from a diameter of 0.039 inches (0.09906 centimetres) to a diameter of 0.025 inches (0.0635 centimetres) at neck 1026. The neck 1026, mount 1027, and bur head base 1085 are machined so as to provide a smooth, gradual transition from bur head 1060 to shank 1025.

An eighth embodiment, shown in Figs. 8, 8A, and 8B, is also designed for deep troughing, retrieving separated instruments and navigating deeply calcified canals. The head 1160 of bur 1100 has a similar cutter design as other embodiments, with a length of approximately 0.055 inches (0.1397 centimetres), widening from 0.013 inches (0.03302 centimetres) in diameter near vertex 1180 to 0.028 inches (0.07112 centimetres) at base 1185. The bur head 1160 has six cutting members 1120 and six rake faces 1141 with two of the cutting members 1135 extending forward of the remainder.

The bur 1100 of the eighth embodiment has a drive shaft 1155 of approximately 0.0920 inches (0.23368 centimetres) in diameter, with a latching member 1156. The shank 1125 tapers in a stepwise progression, and has a portion 1128 that tapers from a diameter of 0.0920 inches (0.23368 centimetres) at the drive shaft 1155 to a diameter of 0.052 inches (0.13208 centimetres) over a length of
0.089 inches (0.22606 centimetres) along longitudinal axis 1150. A second portion 1124 has a diameter of 0.052 inches (0.13208 centimetres) and a length of 0.452 inches (1.14808 centimetres). A third portion 1129 tapers over a length of 0.204 inches (0.51816 centimetres) from a diameter of 0.052 inches (0.13208 centimetres) to a diameter of 0.036 inches (0.09144 centimetres) at neck 1126. The neck 1126, mount 1127, and bur head base 1185 are machined so as to provide a smooth, gradual transition from bur head 1160 to shank 1125.

Many other variations of burs according to the invention can be produced to suit various endodontic procedures. By way of example, the bur heads may be fitted with eight, twelve or another number of cutting blades placed around the diameter of the bur head. The cutter blades may be of a design where all of the blades meet at the vertex, with no two blades forming a drill tooth. It is contemplated that bur heads useful in endodontic procedures may range from a length of 0.039 inches (0.09906 centimetres) to 0.177 inches (0.44958 centimetres), and a base diameter between 0.016 and 0.059 inches (0.04064 and 0.14986 centimetres).

The bur head in all of the aforementioned embodiments of the present invention may be a carbide material, such as tungsten carbide. However, any number of materials may be used to form the bur head, including stainless steel, hardened tool steel, sintered metals, sintered diamonds, sintered ceramics, plated diamond, diamond, zirconia, polymers, ceramics, ceramic oxides, lithium disilicate, titanium, nickel titanium, aluminum, and combinations of the aforementioned materials.

It is also contemplated that burs of the current invention may be packaged together in kits so that all burs contemplated for an endodontic procedure can be grouped together. By way of example, it is contemplated that burs according to the aforementioned first, second, fourth, and fifth embodiments would be packaged together in a kit designed for anterior/bicuspid endodontic procedures. A kit including burs of the first, third, fourth, fifth, sixth, seventh, and eighth embodiments would be packaged together in a kit designed for molar endodontic procedures. The burs according to the present invention may be packaged in a kit by themselves, or a kit may also include other types of burs, including larger diamond or carbide burs designed for crown removal or initial access to molars.

In using the kit for initial access, the clinician identifies the material makeup of any existing restorations (or lack thereof) that must be removed or penetrated to gain access. Once the material is identified, the appropriate bur is selected for the task. Once selected, the clinician applies only enough force to the bur to guide the bur. For deep troughing operations, a light sweeping motion is recommended.

In using burs of the kit for endodontic exploration, the clinician identifies the task to be performed with the corresponding bur according to the present invention. The bur is installed in the dental handpiece and operated at the correct speed. The clinician may use a dental operating microscope or loops in order to provide magnification to the area being explored. The tapering shanks and conical shape of the bur heads are ideal for use with dental microscopy.

The burs of the present invention create smoother incisions and troughs than round tipped, diamond-tipped and ultrasonic devices of the prior art.

The burs according to the above embodiments provide numerous advantages over all prior systems in the following areas: 1) Cutting ability; 2) Positive control for deep troughing; 3) Flexibility; 4) Vision requirements; 5) Dentinal polishing/avoiding the dust and heat buildup; 6) Precision (anti-ledging, accuracy in location of root canals; 7) Cost (especially with respect to ultrasonic tips); 8) Greater efficiency; and 9) Reducing the number of instruments needed for a procedure.

While a detailed description of the preferred embodiment of the invention has been given, it should be appreciated that many variations can be made thereto without departing from the scope of the invention as set forth in the appended claims.

## Claims

1. A self-centering endodontic bur (300) for root canal procedures, comprising:
a drive shaft (355) connectable to a motorized dental handpiece;
a shank (325) attached to the drive shaft (355) with the same axis as the drive shaft (355); and
a head (360) attached to the shank (325) at a base (385);
wherein the head (360) comprises an outer surface (310) having a plurality of cutting blades (320) forming a conical shape from a narrow vertex to the base, wherein the narrow vertex forms a round ended cone, the plurality of cutting blades (320) running parallel to the axis of the shank (325) and extending outwardly from the outer surface (310),
wherein the shank (325) tapers in width from the drive shaft (355) to the head (360) in a manner which allows microscopic observation of the head (360);
wherein the shank (325) is of a stiffness capable of self-centering the endodontic bur (300) in use.

2. A bur (300) according to claim 1, wherein the diameter of the base (385) of the bur head (360) is no more than approximately 0.00762 centimetres greater than the diameter of the shank (325) at the transition between the base (285) of the head (360) and the shank (325).

3. A bur (300) according to claim 1, wherein the length of the head (360) ranges from 0.09906 to 0.44958 centimetres.

4. A bur (300) according to claim 1, wherein the diameter of the head (360) ranges from 0.04064 to 0.14986 centimetres.

5. A bur (300) according to claim 1, wherein the head (360) comprises a carbide material.

6. A bur (300) according to claim 1, wherein the head (360) comprises tungsten carbide.

7. A bur (300) according to claim 1, wherein the head (360) comprises a ceramic material.

8. A bur (300) according to claim 1, the head (360) comprises diamond.

9. A bur (300) according to claim 1, the head (360) comprises a material chosen from stainless steel, hardened tool steel, sintered metals, sintered diamonds, sintered ceramics, plated diamond, diamond, zirconia, polymers, ceramics, ceramic oxides, lithium disilicate, titanium, nickel titanium, or aluminium.

10. A bur (300) according to claim 1, wherein each of the plurality of cutting blades (320) has a rake face (341) with a rake angle, wherein the rake angle ranges from zero degree to minus fifteen degrees.

11. A bur (300) according to claim 10, wherein the rake face (341) varies along the length of the head (360).

12. A kit comprising two or more burs (300) according to claim 1, wherein the burs (300) comprising the kit have a plurality of conical bur cutting heads (360) of various sizes and a plurality of shanks (325) of various sizes for specialized endodontic procedures.

## Patentansprüche

1. Selbstzentrierender endodontischer Bohrer (300) für Wurzelkanalverfahren, bestehend aus:
einer Antriebswelle (355), die mit einem motorisierten zahnärztlichen Handinstrument verbindbar ist;
einem an der Antriebswelle (355) befestigten Schaft (325) mit der gleichen Achse wie die Antriebswelle (355); und
einem Kopf (360), der an einer Basis (385) am Schaft (325) befestigt ist;
wobei der Kopf (360) eine Außenfläche (310) mit einer Vielzahl von Schneidklingen (320) aufweist, die von einem schmalen Scheitelpunkt bis zur Basis eine konische Form bilden, wobei der schmale Scheitelpunkt einen Kegel mit abgerundeter Spitze bildet, wobei die Vielzahl von Schneidklingen (320) parallel zur Achse des Schafts (325) verlaufen und sich von der Außenfläche (310) nach außen erstrecken,
wobei sich der Schaft (325) in seiner Breite von der Antriebswelle (355) zum Kopf (360) hin auf eine Weise verjüngt, die eine mikroskopische Beobachtung des Kopfes (360) ermöglicht;
wobei der Schaft (325) ausreichende Steifigkeit besitzt, so dass sich der endodontische Bohrer (300) im Einsatz selbst zentriert.

2. Bohrer (300) nach Anspruch 1, bei dem der Durchmesser der Basis (385) des Bohrerkopfes (360) nicht mehr als ungefähr 0,00762 Zentimeter größer ist als der Durchmesser des Schaftes (325) am Übergang zwischen der Basis (285) des Kopfes (360) und dem Schaft (325).

3. Bohrer (300) nach Anspruch 1, bei dem die Länge des Kopfes (360) im Bereich von 0,09906 bis 0,44958 Zentimeter liegt.

4. Bohrer (300) nach Anspruch 1, bei dem der Durchmesser des Kopfes (360) im Bereich von 0,04064 bis 0,14986 Zentimeter liegt.

5. Bohrer (300) nach Anspruch 1, bei dem der Kopf (360) ein Carbidmaterial umfasst.

6. Bohrer (300) nach Anspruch 1, bei dem der Kopf (360) Wolframcarbid umfasst.

7. Bohrer (300) nach Anspruch 1, bei dem der Kopf (360) ein Keramikmaterial umfasst.

8. Bohrer (300) nach Anspruch 1, bei dem der Kopf (360) Diamant umfasst.

9. Bohrer (300) nach Anspruch 1, bei dem der Kopf (360) ein Material umfasst, das aus rostfreiem Stahl, gehärtetem Werkzeugstahl, Sintermetallen, Sinterdiamanten, Sinterkeramik, plattiertem Diamant, Diamant, Zirkonia, Polymeren, Keramik, Keramikoxiden, Lithiumdisilicat, Titan, Nickeltitan oder Aluminium ausgewählt ist.

10. Bohrer (300) nach Anspruch 1, bei dem jede der Vielzahl von Schneidklingen (320) eine Spanfläche (341) mit einem Spanwinkel aufweist, wobei der Spanwinkel im Bereich von null Grad bis minus fünfzehn Grad liegt.

11. Bohrer (300) nach Anspruch 10, bei dem sich die Spanfläche (341) entlang der Länge des Kopfes (360) ändert.

12. Set umfassend zwei oder mehr Zahnbohrer (300) nach Anspruch 1, bei dem die das Set bildenden Bohrer (300) eine Vielzahl von konischen Zahnbohrer-Schneidköpfen (360) in unterschiedlichen Größen und eine Vielzahl von Schäften (325) in unterschiedlichen Größen für spezielle endodontische Verfahren aufweisen.

## Revendications

1. Fraise endodontique à centrage automatique (300) pour des procédures de canal radiculaire, comprenant :
un arbre d'entraînement (355) pouvant être connecté à une pièce à main dentaire motorisée ;
une tige (325) fixée à l'arbre d'entraînement (355) avec le même axe que l'arbre d'entraînement (355) ; et
une tête (360) fixée à la tige (325) au niveau d'une base (385) ;
dans laquelle la tête (360) comprend une surface extérieure (310) ayant une pluralité de lames de coupe (320) formant une forme conique à partir d'un sommet étroit vers la base, dans laquelle le sommet étroit forme un cône à extrémité arrondie, la pluralité des lames de coupe (320) s'étendant parallèlement à l'axe de la tige (325) et s'étendant vers l'extérieur à partir de la surface extérieure (310),
dans lequel la tige (325) est effilée en largeur à partir de l'arbre d'entraînement (355) vers la tête (360) d'une manière qui permet une observation microscopique de la tête (360) ;
dans lequel la tige (325) a une rigidité permettant un centrage automatique de la fraise endodontique (300) en cours d'utilisation.

2. Fraise (300) selon la revendication 1, dans laquelle le diamètre de la base (385) de la tête de fraise (360) n'est pas de plus d'environ 0,00762 centimètre supérieur au diamètre de la tige (325) au niveau de la transition entre la base (285) de la tête (360) et la tige (325).

3. Fraise (300) selon la revendication 1, dans laquelle la longueur de la tête (360) est comprise entre 0,09906 et 0,44958 centimètre.

4. Fraise (300) selon la revendication 1, dans laquelle le diamètre de la tête (360) est compris entre 0,04064 et 0,14986 centimètre.

5. Fraise (300) selon la revendication 1, dans laquelle la tête (360) comprend un matériau de carbure.

6. Fraise (300) selon la revendication 1, dans laquelle la tête (360) comprend du carbure de tungstène.

7. Fraise (300) selon la revendication 1, dans laquelle la tête (360) comprend un matériau de céramique.

8. Fraise (300) selon la revendication 1, dans laquelle la tête (360) comprend du diamant.

9. Fraise (300) selon la revendication 1, dans laquelle la tête (360) comprend un matériau choisi parmi acier inoxydable, acier à outil trempé, métaux frittés, diamants frittés, céramiques frittées, diamant plaqué, diamant, zircone, polymères, céramiques, oxydes de céramique, disilicate de lithium, titane, nickel-titane ou aluminium.

10. Fraise (300) selon la revendication 1, dans laquelle chacune de la pluralité de lames de coupe (320) a une face d'attaque (341) avec un angle d'attaque, dans laquelle l'angle d'attaque est compris entre zéro degré et moins quinze degrés.

11. Fraise (300) selon la revendication 10, dans laquelle la face d'attaque (341) varie le long de la longueur de la tête (360).

12. Kit comprenant deux fraises (300) ou plus selon la revendication 1, dans lequel les fraises (300) constituant le kit ont une pluralité de têtes de coupe de fraise coniques (360) de différentes tailles et une pluralité de tiges (325) de différentes tailles pour des procédures endodontiques spécialisées.
